# FASCICULE DE BREVET EUROPEEN

(11) **EP 1 436 302 B1**
(45) Date de publication et mention de la délivrance du brevet: **12.04.2006**
(21) Numéro de dépôt: 02755082.1
(22) Date de dépôt: 21.06.2002
(51) Int. Cl.: C07F 7/02, C07C 43/12, B05D 3/00, B05D 5/08

(54) **COMPOSITION ET PROCEDE DE TRAITEMENT DE SURFACE**
ZUSAMMENSETZUNG UND VERFAHREN ZUR BEHANDLUNG VON OBERFLÄCHEN
SURFACE TREATMENT COMPOSITION AND METHOD

(30) Priorité: 27.06.2001 FR 0108460
(43) Date de publication de la demande: 14.07.2004
(73) Titulaire: E.I. DU PONT DE NEMOURS AND COMPANY, Wilmington, Delaware 19898 (US)
(72) Inventeur: JUHUE, Didier, F-27200 Vernon (FR); LINA, Marie-José, F-69005 Lyon (FR); GAYON, Anne-Claire, F-75017 Paris (FR); CORPART, Jean-Marc, F-95110 Sannois (FR)
(74) Mandataire: Hirsch & Associés
(86) Numéro de dépôt international: PCT/FR2002/002167
(87) Numéro de publication internationale: WO 2003/002572

(56) Documents cités:
- WO-A-99/44820
- US-A- 5 962 188
- DATABASE CHEMICAL ABSTRACTS [en ligne] CAS; NOMURA, F. ET AL.: "Vapor deposition of antifouling and water-resistant organic film with controllable thickness" retrieved from STN Database accession no. 134:18575 XP002194238 & JP 2000 328230 A (TORAY INDUSTRIES, INC.) 28 novembre 2000 (2000-11-28)
- DATABASE CHEMICAL ABSTRACTS [en ligne] CAS; NOMURA, F. ET AL.: "Vapor deposition of organic film with controllable thickness" retrieved from STN Database accession no. 134:18573 XP002194239 & JP 2000 828953 A (TORAY INDUSTRIES, INC.) 28 novembre 2000 (2000-11-28)
- DATABASE CHEMICAL ABSTRACTS [en ligne] CAS; OKA, K.: "Optical thin films for antireflection, antireflecting products having these films, and formation of the films on the products" retrieved from STN Database accession no. 130:140618 XP002194240 & JP 11 002703 A (TORAY INDUSTRIES, INC.) 6 janvier 1999 (1999-01-06)

## Description

La présente invention concerne le domaine des traitements de surface. Elle a pour objet une composition et un procédé de traitement de surface de substrats mettant en oeuvre cette composition. L'invention a également pour objet un composé et son procédé de préparation. Enfin, l'invention a pour objet des substrats susceptibles d'être obtenus par ledit procédé de traitement de surface.

Dans tous les domaines, tels que la construction, l'ameublement, l'électroménager, la présence de salissures sur les surfaces est gênante, notamment au niveau hygiénique et esthétique. Dans le domaine des transports, en particulier dans l'aéronautique ou l'automobile, les salissures peuvent en outre présenter un risque non négligeable, par exemple en raison d'une vision médiocre due à une baisse de la transparence. Des efforts sont alors nécessaires pour maintenir ou rétablir un degré de propreté minimum, ce qui engendre un coût certain.

On connaît des traitements de surface de substrats pour en améliorer les propriétés, notamment de diminuer la rétention de salissure.

Le degré de rétention de la salissure est généralement attribué à la mouillabilité des substrats par les liquides polaires et apolaires. La mouillabilité d'un substrat par un liquide est caractérisée par l'angle de contact que forme une goutte de ce liquide sur le substrat. Ainsi, un angle élevé et notamment supérieur à 90° témoigne du caractère non mouillable du substrat par le liquide.

Depuis un peu plus d'une dizaine d'années, de nombreux traitements de surface hydrophobes et oléophobes ont été proposés.

Ainsi, le brevet US 5 523 161 enseigne un substrat de verre peu mouillable obtenu par traitement avec un perfluoroalkylalkylsilane. Le traitement est rendu plus durable en mélangeant le perfluoroalkylalkylsilane avec des silanes susceptibles d'hydrolyse.

De tels films de perfluoroalkylalkylsilanes sont également décrits dans le document EP 692 463. La résistance à l'abrasion est améliorée par dépôt de ces films par-dessus une sous-couche minérale.

Par ailleurs, la demande WO 99/18168 décrit une composition de revêtement à résistance à l'abrasion et aux rayons UV améliorée contenant un mélange d'alkoxysilane et d'halogénosilane.

Enfin, on connaît par EP 491 251 et EP 492 545 des films monomoléculaires de perfluoroalkylalkylsilanes pouvant présenter entre le groupe perfluoroalkyle et le groupe alkyle une fonction éther, ester ou carbonyle.

Ces traitements antisalissures proposés confèrent aux substrats ainsi revêtus un caractère faiblement mouillable par les liquides polaires et apolaires, donc à la fois hydrophobes et oléophobes. De tels liquides forment alors des gouttes présentant un grand angle de contact.

Il est généralement admis que lorsque de tels substrats sont montés à la verticale ou exposés à la pluie et au vent, par exemple pour former la façade d'un immeuble ou un pare-brise de voiture, la gravité et/ou les forces aérodynamiques suffisent à elles-seules pour éliminer les gouttes d'eau.

Une des raisons supposées de l'existence et de la multiplication de ces taches et/ou auréoles est l'apparition sur le substrat de gouttes d'eau trop petites pour être éliminées par les forces précitées. La formation de ces gouttes est la conséquence des précipitations et de l'état de surface du substrat. Les petites gouttes d'eau, par un mécanisme de dissolution et de redéposition après évaporation sont susceptibles de renforcer l'effet visuel de saleté du substrat particulièrement gênant pour un substrat transparent.

Il a cependant été constaté que les substrats ayant subi un tel traitement peuvent présenter des taches et auréoles diffcilement lavables. Ces salissures proviennent de petites gouttes d'eau perlantes renfermant des salissures ayant séché en déposant la salissure qu'elles contiennent.

Les systèmes proposés jusqu'à présent, basés sur un grand angle de contact des liquides, ne sont donc pas pleinement satisfaisants.

Il existe par conséquent un besoin d'un traitement de surface surmontant les difficultés décrites ci-dessus et qui soit en outre de préférence rapide, facile à mettre en oeuvre, peu onéreux et peu toxique.

Le problème est résolu par un traitement de surface conférant à un substrat une résistance améliorée à la salissure et aux graisses et à l'huile. En effet, il a été constaté que de façon tout à fait surprenante, l'application sur un substrat d'une composition comprenant un silane portant des groupements perfluorés et des groupements polaires permettait d'obtenir des résultats très satisfaisants.

En outre, un substrat ainsi traité présente un caractère auto-nettoyant. On entend par caractère auto-nettoyant une élimination aisée des salissures, par simple ruissellement d'eau par exemple, sans assistance mécanique.

Un premier objet de l'invention est alors une composition comprenant un composé de formule (I) :

(I) R_{f} - B - Ro-Z

dans laquelle :
R_{f} représente un radical alkyle perfluoré à chaîne linéaire ou ramifiée comportant 1 à 20 atomes de carbone, de préférence 6 à 16 atomes de carbone ;
B représente un groupe bivalent pouvant comporter 1 à 3 atomes d'oxygène, de soufre et/ou d'azote ;
Ro représente 1 à 100, de préférence 5 à 20 groupes oxyalkyléniques, de préférence oxyéthyléniques ou oxypropylénique reliés au groupe B par un atome de carbone; et
Z est un atome d'hydrogène ou, lorsque B porte un groupe hydroxyle, un groupe alkyle à chaîne linéaire ou ramifiée comportant 1 à 6 atomes de carbone ;
et un composé de formule (II) :n 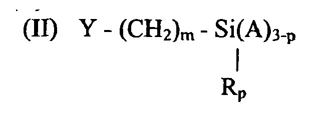 dans laquelle :
m est un nombre entier de 0 à 10, de préférence 0 à 3 ;
R représente chacun indépendamment l'un de l'autre un groupe alkyle linéaire ou ramifié comportant 1 à 6 atomes de carbone ;
p est un nombre entier de 0 à 2, de préférence 0 ;
A représente chacun indépendamment l'un de l'autre un halogène, de préférence le chlore, ou un groupe alkoxy comportant 1 à 6 atomes de carbone, de préférence méthoxy, éthoxy, propyloxy et/ou isopropyloxy ; et
Y représente un groupe comprenant une fonction isocyanate, époxyde, acide carboxylique ou alcool, Y peut également représenter Si(Rₚ)(A)₃₋ₚ lorsque m est différent de zéro, et un groupe A lorsque m est égal à zéro;
et/ ou leur produit de réaction.

De préférence, on choisira le composé de formule (I) parmi les tensioactifs fluorés non ioniques bien connus, par exemple le FORAFAC® 1110D de ATOFINA ou bien le ZONYL® FSN ou FSO de Du Pont ou encore l'UNIDYNE DS 401 de DAIKIN. Le composé de formule (I) peut être un alcool primaire ou un alcool secondaire. L'alcool secondaire peut être obtenu par exemple par réaction d'un époxyde fluoré sur un éther de polyglycol tel que le CH₃O(C₂H₄O)ₙ-C₂H₄OH.

Comme composé selon la formule (II), on choisira de préférence des dérivés présentant une fonction isocyanate ou époxyde. De tels composés sont par exemple le γ-isocyanatopropyltriéthoxysilane (SILQUEST A1310 silane de Witco), le COATOSIL 1770 de Witco ou encore le glycidyl-3-oxypropyl-triéthoxysilane (GLYEO de Hüls/Sivento).

Une telle composition est particulièrement utile pour le traitement de surface de substrats. Dans ce but, la composition contient en combinaison avec un solvant anhydre 1 à 50 %, et en particulier 10 à 40 % en poids de composé de formule (I) et (II) et/ou de leur produit de réaction. De tels solvants anhydres adaptés sont par exemple les esters tels que les acétates d'éthyle, de butyle ou d'isopropyle, les cétones telles que l'acétone, la méthyléthylcétone ou encore la méthylisobutylcétone.

Avantageusement, la composition peut comprendre plusieurs composés de chaque catégorie. La composition peut également être additionnée des divers additifs habituels.

Selon un autre mode de réalisation, cette composition peut être diluée par introduction d'un autre solvant choisi parmi l'eau, les alcools et leurs mélanges. Une telle composition peut comprendre 0,05 à 5% et en particulier 0,1 à 2% en poids des composés cités.

Selon un mode de réalisation particulier, la composition se présente sous la forme d'une émulsion aqueuse.

L'invention a également comme objet un procédé de préparation d'une telle composition. Ce procédé comprend l'étape de :
(a) dissolution d'un composé de formule (I) et d'un composé de formule (II) dans un solvant anhydre approprié.
   Selon un mode de réalisation, on ajoute pour l'hydrolyse des fonctions alkoxysilane ou halogénosilane un agent d'hydrolyse tel que de l'eau. Le procédé comprend alors l'étape supplémentaire de :
(b) addition d'un solvant choisi parmi l'eau, les alcools et leurs mélanges.
   Selon un mode de réalisation particulier, le procédé comprend en outre les étapes suivantes :
(c) émulsification de la solution obtenue à l'étape (b), le cas échéant en présence d'un tensioactifou d'un polymère hydrosoluble; et éventuellement
(d) séparation du solvant anhydre.

L'invention a également comme objet un composé de formule (III) 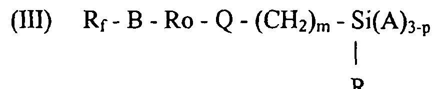 dans laquelle R_{f}, B, Ro, m, A, R, p sont définis comme ci-dessus et Q est une fonction carbamate, ester, alkoxysilane ou éther, de préférence une fonction carbamate ou éther.

Le composé selon la formule (III) peut être obtenu notamment par réaction de la fonction alcool d'un composé de formule (I), et avec le groupe Y du composé de formule (II) en présence le cas échéant d'un catalyseur.

Dans ce mode de réalisation de l'invention, il importe d'éviter l'hydrolyse des groupes alkoxysilane ou halogénosilane, notamment en travaillant en milieu anhydre. En effet, l'hydrolyse de ces groupes entraîne la réticulation du silane. Les conditions adéquates peuvent être déterminées aisément par l'homme de l'art. L'addition d'un catalyseur de la réaction peut être avantageuse.

La solution du composé dans le solvant de synthèse constitue un mode de réalisation préféré de l'invention. Une telle composition est obtenue directement après la synthèse du composé et ne nécessite aucune étape de séparation subséquente.

Le composé de formule (III) peut cependant également être isolé sous forme d'une poudre, d'une pâte ou d'un liquide, par élimination totale du solvant de synthèse puis incorporé dans d'autres solvants ou compositions. De préférence, on introduira le composé isolé dans un solvant anhydre adapté tel que par exemple un solvant choisi parmi les esters tels que les acétates d'éthyle, de butyle ou d'isopropyle, les cétones tels que l'acétone, la méthyléthylcétone et la méthylisobutylcétone. Une telle composition peut être stockée pendant une durée prolongée.

Selon un autre mode de réalisation de l'invention, le composé de formule (III) peut également être synthétisé *in situ* au moment de l'application d'une composition selon l'invention comprenant ses précurseurs.

La nature chimique de la couche formée est moins bien définie dans la mesure où la réticulation des composés (I) et (II) hydrolysés conduit outre au composé de formule (III) aussi à d'autres produits. Cependant, ce mode de réalisation conduit à des résultats de qualité comparable et présente en outre l'avantage de réduire le nombre d'étapes nécessaires à la préparation.

Un autre mode de réalisation de l'invention concerne une composition selon l'invention comprenant en outre d'autres solvants tels que l'eau et/ou des alcools tels que le méthanol, l'éthanol ou l'isopropanol, de préférence l'éthanol ou l'isopropanol. De préférence, on utilise un mélange d'eau et d'alcool. Ces compositions sont notamment utiles comme compositions prêtes à l'emploi.

L'eau ajoutée a tout d'abord pour mission de servir d'agent d'hydrolyse des groupes alkoxysilane ou halogénosilane. Les alcools représentent en général de bons solvants des produits contenus dans la composition. Ces compositions sont par ailleurs particulièrement avantageuses en termes de protection de l'environnement et de sécurité de mise en oeuvre.

Ces compositions peuvent être obtenues par exemple par dilution de la composition comprenant un solvant anhydre dans une solution hydro-alcoolique. La solution hydroalcoolique contient de 0 à 100 %, de préférence de 10 à 90 % en poids d'alcool. L'ajout d'un acide organique ou minéral choisi, par exemple parmi l'acide acétique ou l'acide chlorhydrique est avantageux en ce qu'il catalyse l'hydrolyse des fonctions halogénosilanes ou alkoxysilanes.

La composition en solvant anhydre peut également être diluée dans l'eau. Dans ce cas, il peut être avantageux de travailler en présence d'un ou plusieurs tensioactifs et/ou d'un ou plusieurs polymères hydrosolubles. La solution est fortement agitée, par exemple au moyen d'un homogénéisateur haute pression, puis distillée afin d'éliminer tout ou partie du solvant anhydre. On obtient ainsi une émulsion aqueuse stable.

Les réactions qui se déroulent lors de l'application de la composition sur la surface d'un substrat ne sont pas connues avec précision. Il semble cependant que les groupes alkoxysilane ou halogénosilane présents dans la composition soient hydrolysés sous l'effet de l'agent d'hydrolyse en groupes Si-OH, lesquels peuvent réagir entre eux mais aussi avec les groupes réactifs présents en surface du substrat, par exemple les groupes Si-OH dans le verre. Le dernier type de réaction est aussi désigné comme adsorption chimique de la couche déposée sur le substrat. Les groupes silane peuvent également réagir de façon intermoléculaire pour former un réseau tridimensionnel comprenant des liaisons Si-O-Si, conférant ainsi une grande dureté à la couche ainsi déposée.

Un autre objet de l'invention concerne un procédé de traitement de surface de substrat, comprenant l'étape de :
(i) l'application sur le substrat à traiter d'une composition selon l'invention en présence d'un agent d'hydrolyse des groupes alkoxysilane ou halogénosilane présents.

Les substrats sont de préférence soigneusement nettoyés avant le traitement de surface. Un tel nettoyage améliore considérablement les propriétés d'adhésion, par exemple en activant les fonctions hydroxyle en surface d'un substrat en verre. Pour des substrats de verre, il s'est avéré avantageux de procéder à un trempage dans une solution sulfochromique suivi d'un rinçage à l'eau déminéralisée et un séchage.

La composition appliquée sur le substrat peut déjà contenir un agent d'hydrolyse tel que l'eau, par exemple être sous la forme d'une solution hydroalcoolique ou une émulsion aqueuse. Un catalyseur de l'hydrolyse tel qu'un acide organique ou minéral peut éventuellement être ajouté.

La composition appliquée peut également être sous la forme de solution dans un solvant anhydre. Dans ce cas, l'humidité de l'air joue le rôle d'agent d'hydrolyse.

La composition telle que décrite peut être appliquée sur les substrats par des techniques appropriées et connues, comme par exemple la pulvérisation, le brossage, l'enduction, l'imprégnation, l'immersion, à une concentration allant de 0,05 à 5 %, de préférence de 0,1 à 2 % de matière active.

Selon les substrats, un traitement thermique peut être appliqué. Ainsi, avantageusement, mais non obligatoirement, le procédé comprend en outre une étape de:
(ii) traitement thermique du substrat obtenu après l'étape (i) à une température comprise entre 50 et 200°C pendant une durée comprise entre une seconde et 24 heures.

De préférence, le procédé est mis en oeuvre en utilisant comme agent d'hydrolyse de l'eau.

En général, le traitement thermique est d'autant plus court que sa température est élevée. Ce traitement thermique permet avant tout d'évaporer le solvant. Ainsi, il sera recommandé lorsque le solvant a une température d'évaporation élevée.

Il est également possible que l'agent d'hydrolyse se trouve sur le substrat sur lequel est appliquée la composition.

L'invention a finalement comme objet le substrat susceptible d'être obtenu par le procédé décrit ci-dessus.

De tels substrats sont en général des substrats minéraux ou organiques en matière transparente, sur lesquels les traces de résidus de gouttes séchées sont les plus gênantes. Ces substrats peuvent préalablement au procédé de traitement de surface conforme à l'invention avoir été l'objet d'un autre traitement de surface, par exemple d'un traitement anti-reflets. Les matériaux concernés sont par exemple le verre, le polyméthacrylate de méthyle et le polycarbonate, mais aussi à tout type de matériaux comme la pierre, la brique, le béton, le bois, les carrelages, le cuir ou encore les textiles.

Les substrats traités conformément au procédé selon l'invention présentent une bonne résistance aux huiles et un caractère auto-nettoyant.

Les exemples suivants illustrent l'invention sans en limiter la portée.

### EXEMPLE 1

Dans un ballon tricol de 250 ml muni d'une sonde thermométrique, d'un réfrigérant relié à l'atmosphère par une garde à CaCl₂, on introduit 20 parties d'alcool fluoré oxyéthylé FORAFAC 1110 de structure C₆F₁₃C₂H₄O(CH₂-CH₂O)ₙH, avec un n moyen de 11. Ce composé a été synthétisé par action de l'oxyde d'éthylène sur l'alcool C₆F₁₃-C₂H₄OH avec une catalyse BF₃/éther. Le dioxanne sous produit par la réaction a été éliminé au toluène qui a ensuite été distillé. On dilue l'alcool oxyéthylé par 42 g d'acétate d'éthyle anhydre, puis on ajoute le catalyseur : 0,2 partie de dibutyldilaurate d'étain. Après inertage du milieu réactionnel par balayage à l'azote anhydre, on chauffe la solution au reflux à 77°C, puis on introduit la quantité stoechiométrique par rapport au groupe OH de 3-(triéthoxy)silylpropylisocyanate de formule (C₂H₅O)₃Si(CH₂)₃₋N=C=O, soit 7,9 parties. La réaction est suivie par dosage des N=C=O en IRFT ; elle est complète en 3 heures.

On obtient la solution S₁ à 40 % de matière active de structure :
C₆F₁₃-C₂H₄O(CH₂-CH₂O)ₙ-OC(O)NH-(CH₂)₃Si(OC₂H₅)₃ avec n moyen de 11.

### EXEMPLE 2

Cet exemple décrit la préparation d'une composition pour la synthèse in situ du composé lors de l'application. Dans un flacon de 125 ml, on introduit 18 parties d'alcool fluoré oxyéthylé FORAFAC 1110 de structure : C₆F₁₃C₂H₄O(CH₂-CH₂O)ₙH avec un n moyen de 11 que l'on dissout dans 55 parties d'acétate d'éthyle et on ajoute 18 parties de tétraéthoxysilane Si(OC₂H₅)₄ de Aldrich. On obtient ainsi la solution S₂ (40% d'extrait sec) d'un mélange bi-composants prêt à l'emploi.

### EXEMPLE 3

Cet exemple décrit la préparation d'une composition pour la synthèse in situ du composé lors de l'application. Dans un flacon de 125 ml, on introduit 25 parties d'alcool fluoré oxyéthylé FORAFAC 1110 de structure C₆F₁₃C₂H₄O(CH₂-CH₂O)ₙH avec un n moyen de 11 que l'on dissout dans 55 parties d'acétate d'éthyle et on ajoute 12 parties d'époxyde silané Coatosil 1770 de WITCO de structure :

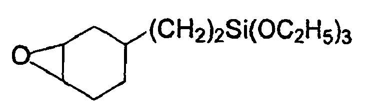

On obtient alors la solution S₃ (40% d'extrait sec) d'un mélange bi-composants prêt à l'emploi.

### EXEMPLE 4

Cet exemple décrit la préparation d'un mélange pour la synthèse in situ du composé lors de l'application. Dans un flacon de 125 ml, on introduit 25 parties d'alcool fluoré oxyéthylé FORAFAC 1110 de structure : C₆F₁₃C₂H₄O(CH₂-CH₂O)ₙH avec un n moyen de 11 que l'on dissout dans 55 parties d'acétate d'éthyle et on ajoute 11,7 parties d'époxyde silané GLYEO de HÜLS/SIVENTO de structure :

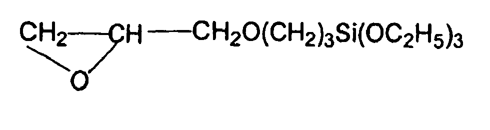

On obtient alors la solution S₄ (40% d'extrait sec) d'un mélange bi-composants prêt à l'emploi.

### EXEMPLE 5

Dans un ballon tricol de 100 ml muni d'une sonde thermométrique, d'un réfrigérant et d'une ampoule de coulée, on introduit 20 parties d'un adduit de perfluoroalkyle et d'éthylène oxyde hydroxylé, l'UNIDYNE DS 401 de DAIKIN ayant la formule (CF₃)₂CF(CF₂)ₙCH₂CHOHCH₂O(C₂H₄O)ₙ·CH₃ avec n = 6/8/10 et n'≈ 8 et 50 parties d'acétate d'éthyle. Après inertage du milieu réactionnel par balayage à l'azote anhydre, on chauffe la solution au reflux à 77°C, on élimine les traces d'eau du tensioactif par distillation azéotropique. On ajoute 0,2 partie de dibutyldilaurate d'étain puis on introduit la quantité staechiométrique par rapport au groupe OH, de 3-(triéthoxy)silylpropylisocyanate (C₂H₅O)₃Si(CH₂)₃-N=C=O soit 4,6 parties. La réaction est suivie par dosage des N=C=O en IRFT, elle est complète en 2 heures.

On obtient la solution S₅ à 33 % de matière active de formule :

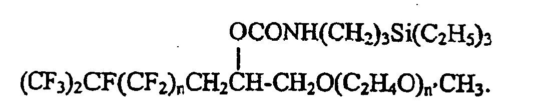

### EXEMPLE COMPARATIF 1

Dans un ballon tricol de 100 ml muni d'une sonde thermométrique, d'un réfrigérant relié à l'atmosphère par une garde à CaCl₂ et d'une ampoule de coulée, on introduit 19,4 parties de thiol fluoré de structure C₈F₁₇C₂H₄SH et 5 parties d'acétate d'éthyle anhydre.

Après inertage du milieu réactionnel par balayage à l'azote anhydre, on chauffe la solution au reflux à 77°C puis on introduit en 5 heures par l'ampoule de coulée une solution contenant 10 parties de méthacrylate de 2-(triméthoxy)silylpropyle (MEMO) ayant la formule CH₂=C(CH₃)C(O)O(CH₂)₃Si(OCH₃)₃] et 0,3 partie d'amorceur AIBN, dilués par 40 parties d'acétate d'éthyle anhydre.

La solution S_{c1} obtenue contient 39,5 % en poids du monoadduit correspondant à la formule : C₈F₁₇C₂H₄S-CH₂-CH(CH₃)C(O)O(CH₂)₃Si(OCH₃)₃.

### EXEMPLE COMPARATIF 2

Dans un ballon tricol de 100 ml muni d'une sonde thermométrique, d'un réfrigérant et d'une ampoule de coulée, on introduit 45 parties d'un tensioactif oxyéthylé, le BRIJ 76 de la Société ICI [de formule CH₃(CH₂)₁₇(OC₂H₄)₁₀OH] et 50 parties d'acétate d'éthyle. Après inertage du milieu réactionnel par balayage à l'azote anhydre, on chauffe la solution au reflux à 77°C, on élimine les traces d'eau du tensioactif par distillation azéotropique. On ajoute 0,1 partie de dibutyldilaurate d'étain puis on introduit la quantité stoechiométrique par rapport aux groupements OH, de 3-(triéthoxy)silylpropylisocyanate de formule (C₂H₅O)₃Si(CH₂)₃-N=C=O, soit 17,1 parties. La réaction est suivie par dosage des N=C=O en IRFT, elle est complète en 5 heures.

On obtient la solution S_{C2} à 55 % de matière active de structure :

CH₃(CH₂)₁₇-(OCH₂CH₂)₁₀O CONH(CH₂)₃Si(OC₂H₅)₃.

Les solutions obtenues selon les exemples S₁, S₂, S₃, S₄, S₅ S_{C1}, S_{C2} sont ensuite diluées dans un mélange eau/isopropanol (ratio 10:90) ajusté à une valeur de pH de 5 avec de l'acide acétique. On obtient des solutions contenant 0,1 % en poids de matière active.

Ces solutions ont ensuite été appliquées sur des plaques de verre minéral utilisées pour les préparations de microscopie optique nettoyées préalablement par une trempe dans un mélange sulfochromique puis rincées à l'eau déminéralisée et séchées. Les plaques de verre ainsi préparées ont ensuite été plongées dans les solutions aqueuses à 0,1 % de matière active pendant 1 heure à température ambiante, puis émergées verticalement à 0,5 mm/mn à l'aide d'un tensiomètre KRÜSS, et enfin séchées 1 heure à 60°C à l'étuve.

La résistance à l'huile et la lavabilité des plaques de verre ainsi traitées ont été évaluées.

Pour évaluer les performances des substrats traités selon l'invention, on a utilisé les tests suivants :

### Résistance à l'huile (caractère oléophobe)

La résistance à l'huile est caractérisée par la mesure d'angle de contact de gouttes de vaseline, de dodécane et de tétradécane déposées sur le substrat traité. On réalise une mesure de comparaison sur un substrat en verre non traité. La mesure de l'angle est réalisée à l'aide d'un goniomètre de type ERMA G1.

Une goutte de faible volume (~ 1,5 µl) d'huile est déposée sur le substrat traité à l'aide d'une seringue commandée par une vis micrométrique. Le substrat est maintenu en position horizontale sur une platine dont l'horizontalité est contrôlée par un niveau à bulle. L'angle est mesuré aux deux tangentes aux points de contact de la goutte sur le substrat. La moyenne de ces deux angles sur au moins quatre gouttes est retenue.

### Caractère autonettoyant ou test de lavabilité

Le caractère autonettoyant est déterminé à l'aide d'une variante du test dit "spray test" décrit dans la norme AATCC 22-1989. Il consiste à verser sur un substrat traité conformément à l'invention puis sali, fixé sur un support incliné à 45°, 50 ml d'eau d'un entonnoir muni d'une pomme d'arrosage en 5 secondes environ et d'une hauteur de 20 cm environ.

Les substrats obtenus par traitement avec des solutions selon l'invention et les exemples comparatifs sont préalablement salis par pulvérisation d'huile de vaseline colorée en rouge par du colorant type organol. Le dépôt réalisé est de l'ordre de 30 g/m². On procède ensuite au passage de l'eau conformément au test et à l'appréciation visuelle du résultat. On note en particulier la persistance des taches d'huiles colorées ainsi que la présence de gouttes d'eau résiduelles.

Les résultats sont portés dans le tableau suivant.

L'exemple comparatif 1 est un alkoxysilane portant un groupe perfluoré et portant également un groupe ester et thioéther. Il a un caractère fortement oléophobe comme il ressort des angles de contact mesurés par rapport aux liquides apolaires. On observe donc l'apparition de petites gouttelettes d'huile au moment où le substrat est sali par la pulvérisation d'huile colorée. Cependant, ce type de traitement ne permet pas l'élimination de salissures par simple passage de l'eau. En effet, il subsiste des taches colorées de petite taille, qui vraisemblablement proviennent du séchage de petites gouttelettes d'eau comportant des impuretés.

L'exemple comparatif 2 concerne un composé portant des groupes hydrophiles, mais pas de groupes perfluorés. On voit à partir des faibles angles de contacts mesurés que ce composé est oléophile. On constate qu'en effet, le substrat est mouillé par la vaseline sans formation de gouttelettes. Par ailleurs, le substrat a un caractère plutôt hydrophile. Cependant, ce caractère n'est pas à lui seul suffisant puisqu'on observe des traînées colorées après passage de l'eau.

Par ailleurs, l'essai sur le verre non traité démontre le comportement peu satisfaisant d'un substrat ayant un caractère oléophile et hydrophobe.

| Traitement | θ(°) vaseline | θ(°) dodécane | θ(°) tétradécane | Lavabilité | |
|---|---|---|---|---|---|
| | (°C) | (°C) | (°C) | Taches | Gouttes d'eau |
| S₁ | 61 | 52 | 59 | - | - |
| S_{C1} | 82 | 73 | 79 | +++ | ++ |
| S_{C2} | <20 | <20 | <20 | +++ | + |
| S₂ | 61 | 44 | 50 | - | - |
| S₃ | 61 | 46 | 54 | - | - |
| S₄ | 61 | 52 | 56 | - | - |
| S₅ | n.d. | n.d. | n.d. | - | - |
| Verre Non traité | <20 | <20 | <20 | ++ | +++ |

| | | | | | |
|---|---|---|---|---|---|
| - : pratiquement aucune tache ou goutte visible | | | | | |
| + : peu de taches ou de gouttes visibles | | | | | |
| ++ : taches ou gouttes visibles plus nombreuses | | | | | |
| +++ : très nombreuses taches ou gouttes visibles | | | | | |
| n.d. : non déterminé | | | | | |

En revanche, on voit clairement que les substrats traités avec les compositions selon l'invention, présentent des résultats très satisfaisants, à savoir la quasi absence de taches colorées de vaseline, et également de petites gouttes d'eau susceptibles de renforcer ultérieurement l'effet visuel de saleté su substrat. On suppose que ce comportement est lié au caractère à la fois oléophobe et hydrophile de ces compositions.

Ainsi, les compositions selon l'invention permettent un traitement anti-salissure efficace de substrats, consistant en une élimination des salissures par simple passage d'eau.

## Revendications

1. Composition comprenant un composé de formule (I) :
(I) R_{f} - B - Ro-Z
dans laquelle :
R_{f} représente un radical alkyle perfluoré à chaîne linéaire ou ramifiée comportant 1 à 20 atomes de carbone ;
B représente un groupe bivalent pouvant comporter 1 à 3 atomes d'oxygène, de soufre et/ou d'azote ;
Ro représente 1 à 100, de préférence 5 à 20 groupes oxyalkyléniques reliés au groupe B par un atome de carbone; et
Z est un atome d'hydrogène ou, lorsque B porte un groupe hydroxyle, un groupe alkyle à chaîne linéaire ou ramifiée comportant 1 à 6 atomes de carbone ;
et un composé de formule (II) : 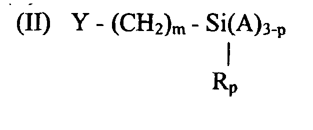 dans laquelle :
m est un nombre entier de 0 à 10 ;
R représente chacun indépendamment l'un de l'autre un groupe alkyle linéaire ou ramifié comportant 1 à 6 atomes de carbone ;
p est un nombre entier de 0 à 2 ;
A représente chacun indépendamment l'un de l'autre un halogène ou un groupe alkoxy comportant 1 à 6 atomes de carbone ; et
Y représente un groupe comprenant une fonction isocyanate, époxyde, acide carboxylique ou alcool, Y peut également représenter Si(Rₚ)(A)₃₋ₚ lorsque m est différent de zéro, et un groupe A lorsque m est égal à zéro ;
et/ou leur produit de réaction.

2. Composition selon la revendication précédente, dans laquelle dans la formule (I), R_{f} comporte 6 à 16 atomes de carbone.

3. Composition selon les revendications précédentes, dans laquelle dans la formule (I), Ro représente 5 à 20 groupes oxyalkyléniques, de préférence oxyéthyléniques ou oxypropyléniques.

4. Composition selon les revendications précédentes, dans laquelle dans la formule (II), m est un nombre de 0 à 3.

5. Composition selon les revendications précédentes, dans laquelle dans la formule (II), Y comprend une fonction isocyanate ou époxyde.

6. Composition selon les revendications précédentes, dans laquelle dans la formule (II), A représente un groupe méthoxy, éthoxy, propyloxy et/ou isopropyloxy.

7. Composition selon les revendications précédentes, dans laquelle p est 0.

8. Composition selon les revendications précédentes, comprenant 1 à 50% et en particulier 10 à 40% en poids de composé de formule (I) et (II) et /ou de leur produit de réaction.

9. Composition selon les revendications précédentes, comprenant en outre un solvant choisi parmi l'eau, les alcools et leurs mélanges.

10. Composition selon la revendication précédente comprenant 0,05 à 5% et en particulier 0,1 à 2% en poids de matière active.

11. Composition selon les revendications précédentes sous la forme d'une émulsion aqueuse.

12. Procédé de préparation d'une composition selon l'une des revendications précédentes, comprenant l'étape de :
(a) dissolution d'un composé de formule (I) et d'un composé de formule (II) dans un solvant anhydre approprié.

13. Procédé selon la revendication précédente, comprenant en outre l'étape de :
(b) addition d'un solvant choisi parmi l'eau, les alcools et leurs mélanges.

14. Procédé selon la revendication précédente, comprenant en outre l'étape suivante :
(c) émulsification de la solution obtenue à l'étape (b), le cas échéant en présence d'un tensioactif ou d'un polymère hydrosoluble ; et éventuellement
(d) séparation du solvant anhydre.

15. Composé de formule (III) 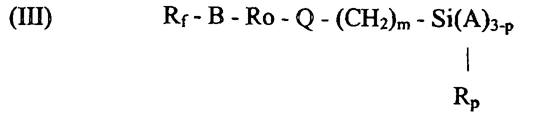 dans laquelle :
R_{f}, B, Ro, m A, R, p sont définis selon la revendication 1 et Q est une fonction carbamate, ester, alkoxysilane ou éther.

16. Composé selon la revendication précédente, dans lequel Q est une fonction carbamate ou éther.

17. Procédé de préparation du composé de formule (III) par réaction d'un composé de formule (I) et d'un composé de formule (II) en présence d'un agent d'hydrolyse et le cas échéant d'un catalyseur.

18. Procédé de traitement de surface comprenant l'étape de :
(i) application sur le substrat à traiter d'une composition selon l'une des revendications 1 à 11 en présence d'un agent d'hydrolyse des groupes alkoxysilane ou halogénosilane présents.

19. Procédé selon la revendication précédente, comprenant en outre l'étape de :
(ii) traitement thermique du substrat obtenu à l'étape (i) à une température comprise entre 50 et 200°C pendant une durée comprise entre une seconde et 24 heures.

20. Procédé selon la revendication 18 ou 19, dans lequel l'agent d'hydrolyse est l'eau.

21. Substrat traité susceptible d'être obtenu par le procédé selon l'une des revendications 18 à 20.

22. Substrat traité selon la revendication 21, dans lequel le substrat est choisi parmi le verre, le polyméthacrylate de méthyle et le polycarbonate.

## Claims

1. Composition comprising a compound of formula (I):
(I) R_{f} - B -Ro-Z
wherein:
R_{f} represents a perfluorinated straight-chain or branched alkyl radical comprising 1 to 20 carbon atoms;
B represents a bivalent group which may comprise 1 to 3 atoms of oxygen, sulphur and/or nitrogen;
Ro represents 1 to 100, preferably 5 to 20 oxyalkylene groups connected to the group B via a carbon atom; and
Z is a hydrogen atom or, if B carries a hydroxyl group, a straight-chain or branched alkyl group comprising 1 to 6 carbon atoms; and a compound of formula (II): 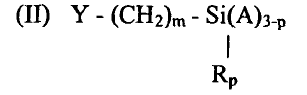
wherein:
m is an integer from 0 to 10;
R represents, each one independently of the other, a straight-chain or branched alkyl group comprising 1 to 6 carbon atoms;
p is an integer from 0 to 2;
A represents, each one independently of the other, a halogen or an alkoxy group comprising 1 to 6 carbon atoms; and
Y represents a group comprising an isocyanate, epoxy, carboxylic acid or alcohol function, Y may also represent Si(Rₚ)(A)₃₋ₚ when m is different from zero, and a group A when m is equal to zero;
and/or the reaction product thereof.

2. Composition according to the preceding claim, wherein R_{f} in formula (I) comprises 6to 16 carbon atoms.

3. Composition according to the preceding claims, wherein Ro in formula (I) represents 5 to 20 oxyalkylene groups, preferably oxyethylene or oxypropylene groups.

4. Composition according to the preceding claims, wherein m in formula (II) is a number from 0 to 3.

5. Composition according to the preceding claims, wherein Y in formula (II) comprises an isocyanate or epoxy function.

6. Composition according to the preceding claims, wherein A in formula (II) represents a methoxy, ethoxy, propyloxy and/or isopropyloxy group.

7. Composition according to the preceding claims, wherein p is 0.

8. Composition according to the preceding claims, comprising 1 to 50%, and in particular 10 to 40% by weight of compound of formula (I) and (II) and/or of the reaction product thereof.

9. Composition according to the preceding claims, further comprising a solvent selected from among water, the alcohols and mixtures thereof.

10. Composition according to the preceding claim, comprising 0.05 to 5%, in particular 0.1 to 2% by weight of active substance.

11. Composition according to the preceding claims in the form of an aqueous emulsion.

12. Process for preparing a composition according to any one of the preceding claims, comprising the step of:
(a) dissolving a compound of formula (I) and a compound of formula (II) in an appropriate anhydrous solvent.

13. Process according to the preceding claim, further comprising the step of:
(b) adding a solvent selected from among water, the alcohols and the mixtures thereof.

14. Process according to the preceding claim, further comprising the following step:
(c) emulsification of the solution obtained in step (b), if necessary in the presence of a surfactant or a water-soluble polymer; and optionally
(d) separation of the anhydrous solvent.

15. Compound of formula (III): 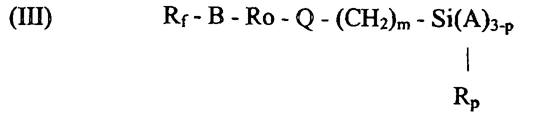 wherein:
R_{f}, B, Ro, m, A, R and p are defined as in claim 1 and Q is a carbamate, ester, alkoxysilane or ether function.

16. Compound according to the preceding claim, wherein Q is a carbamate or ether function.

17. Process for preparing the compound of formula (III) by reacting a compound of formula (I) and a compound of formula (II) in the presence of a hydrolysis agent and if necessary a catalyst.

18. Process for surface treatment comprising the step of:
(i) applying a composition according to any one of claims 1 to 11 to the substrate being treated, in the presence of a hydrolysis agent for the alkoxysilane or halosilane groups present.

19. Process according to the preceding claim, further comprising the step of:
(ii) heat-treating the substrate obtained in step (i) at a temperature between 50 and 200°C for a period of between 1 second and 24 hours.

20. Process according to claim 18 or 19 wherein the hydrolysis agent is water.

21. Treated substrate obtainable by the method according to one of claims 18 to 20.

22. Treated substrate according to claim 21, wherein the substrate is selected from among glass, polymethyl methacrylate and polycarbonate.

## Patentansprüche

1. Zusammensetzung, die Folgendes umfasst: eine Verbindung der Formel (1):
R_{f} - B - Ro-Z (I)
wobei:
R_{f} ein gerad- oder verzweigtkettiges perfluoriertes Alkylradikal mit 1 bis 20 Kohlenstoffatomen repräsentiert;
B eine zweiwertige Gruppe repräsentiert, die 1 bis 3 Sauerstoff-, Schwefel- und/oder Stickstoffatome haben kann;
Ro 1 bis 100, vorzugsweise 5 bis 20 Oxyalkylen-Gruppen repräsentiert, die durch ein Kohlenstoffatom mit der Gruppe B verbunden sind; und
Z ein Wasserstoffatom oder, wenn B eine Hydroxylgruppe trägt, eine gerad- oder verzweigtkettige Alkylgruppe mit 1 bis 6 Kohlenstoffatomen ist;
und eine Verbindung der Formel (II): 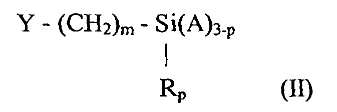 wobei:
m eine ganze Zahl von 0 bis 10 ist;
R jeweils unabhängig voneinander eine lineare oder verzweigte Alkylgruppe mit 1 bis 6 Kohlenstoffatomen repräsentiert;
P eine ganze Zahl von 0 bis 2 ist;
A unabhängig voneinander ein Halogen oder eine Alkoxygruppe mit 1 bis 6 Kohlenstoffatomen repräsentiert; und
Y eine Gruppe repräsentiert, die eine Isocyanat-, Epoxid-, Carbonsäure- oder Alkoholfunktion umfasst, Y auch, wenn m ungleich null ist, Si(Rₚ)(A)₃₋ₚ und, wenn m gleich null ist, eine Gruppe A repräsentieren kann;
und/oder deren Reaktionsprodukt.

2. Zusammensetzung nach dem vorherigen Anspruch, wobei in der Formel (I) R_{f} 6 bis 16 Kohlenstoffatome aufweist.

3. Zusammensetzung nach den vorherigen Ansprüchen, wobei in der Formel (I) Ro 5 bis 20 Oxyalkylen-Gruppen, vorzugsweise Oxyethylen- oder Oxypropylen-Gruppen repräsentiert.

4. Zusammensetzung nach den vorherigen Ansprüchen, wobei in der Formel (II) m eine Zahl von 0 bis 3 ist.

5. Zusammensetzung nach den vorherigen Ansprüchen, wobei in der Formel (II) Y eine Isocyanat- oder Epoxidfunktion aufweist.

6. Zusammensetzung nach den vorherigen Ansprüchen, wobei in der Formel (II) A eine Methoxy-, Ethoxy-, Propyloxy- und/oder Isopropyloxygruppe repräsentiert.

7. Zusammensetzung nach den vorherigen Ansprüchen, wobei p gleich 0 ist.

8. Zusammensetzung nach den vorherigen Ansprüchen, die 1 bis 50 Gew.-% und insbesondere 10 bis 40 Gew.-% der Verbindung der Formel (I) und (II) und/oder von deren Reaktionsprodukt beinhaltet.

9. Zusammensetzung nach den vorherigen Ansprüchen, die ferner ein Lösungsmittel beinhaltet, das ausgewählt ist aus Wasser, Alkoholen und Gemischen davon.

10. Zusammensetzung nach dem vorherigen Anspruch, die 0,05 bis 5 Gew.-% und insbesondere 0,1 bis 2 Gew.-% Wirkstoff umfasst.

11. Zusammensetzung nach den vorherigen Ansprüchen in der Form einer wässrigen Emulsion.

12. Verfahren zur Herstellung einer Zusammensetzung nach einem der vorherigen Ansprüche, das den folgenden Schritt umfasst:
(a) Auflösen einer Verbindung der Formel (I) und einer Verbindung der Formel (II) in einem geeigneten wasserfreien Lösungsmittel.

13. Verfahren nach dem vorherigen Anspruch, das ferner den folgenden Schritt umfasst:
(b) Zugeben eines Lösungsmittels, das aus Wasser, Alkoholen und Gemischen davon ausgewählt ist.

14. Verfahren nach dem vorherigen Anspruch, das ferner den folgenden Schritt umfasst:
(c) Emulgieren der in Schritt (b) erhaltenen Lösung, ggf. in Anwesenheit eines Tensids oder eines wasserlöslichen Polymers; und eventuell
(d) Abscheiden des wasserfreien Lösungsmittels.

15. Verbindung der Formel (III): 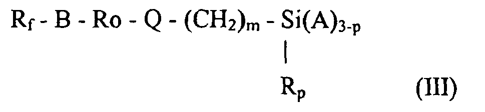 wobei:
R_{f}, B, Ro, m, A, R, p wie in Anspruch 1 definiert sind und Q eine Carbamat-, Ester- Alkoxysilan- oder Etherfunktion ist.

16. Verbindung nach dem vorherigen Anspruch, wobei Q eine Carbamat- oder Etherfunktion ist.

17. Verfahren zur Herstellung einer Verbindung der Formel (III) durch die Reaktion einer Verbindung der Formel (I) und einer Verbindung der Formel (II) in Anwesenheit eines Hydrolysemittels und ggf. eines Katalysators.

18. Verfahren zur Behandlung einer Oberfläche, das den folgenden Schritt umfasst:
(i) Auftragen einer Zusammensetzung nach einem der Ansprüche 1 bis 11 auf ein zu behandelndes Substrat in Anwesenheit eines Mittels zum Hydrolysieren der vorliegenden Alkoxysilan- oder Halogenosilangruppen.

19. Verfahren nach dem vorherigen Anspruch, das ferner den folgenden Schritt umfasst:
(ii) Wärmebehandeln des in Schritt (i) erhaltenen Substrats auf einer Temperatur zwischen 50 und 200°C für eine Dauer zwischen einer Sekunde und 24 Stunden.

20. Verfahren nach Anspruch 18 oder 19, bei dem das Hydrolysemittel Wasser ist.

21. Behandeltes Substrat, das mit dem Verfahren nach einem der Ansprüche 18 bis 20 erhalten wurde.

22. Behandeltes Substrat nach Anspruch 21, bei dem das Substrat ausgewählt ist aus Glas, Methylpolymethacrylat und Polycarbonat.
